# EUROPEAN PATENT APPLICATION

(11) **EP 4 732 937 A1**
(43) Date of publication of application: **29.04.2026**
(21) Application number: 24208226.1
(22) Date of filing: 22.10.2024
(51) Int. Cl.: B01D 61/42, B01D 61/44, B01D 61/46, C02F 1/66, C02F 103/20, C02F 101/10

(54) **METHOD OF RECOVERING PHOSPHORUS MATERIALS FROM WASTE STREAMS**

(71) Applicant: University of Galway, H91 TK33 Galway (IE)
(72) Inventor: Zhan, Xinmin, Galway (IE); Meng, Jizhong, Galway (IE)
(74) Representative: Barker Brettell LLP

(57) **Abstract**

Methods for recovering phosphorus materials from various waste streams using a bipolar membrane electrodialysis reactor to achieve acidification of the waste stream, and methods of further purification of the recovered phosphorus material.

## Description

### Field

The present invention relates to a method for recovering phosphorus materials from waste streams.

### Background

Phosphorus materials are integral to modern society. A well-known use of phosphorus materials is as a nutrient in fertilizers, promoting healthy and productive crop growth. Phosphorus materials are further utilised in manufacturing feed additives and industrial products. Increasingly, lithium iron phosphate (LFP) batteries are being used in the manufacture of electric vehicles that are considered essential for the energy transition away from fossil fuels.

Phosphorus is a non-renewable resource. It is one of the raw materials classified as critical by the European Union. According to the International Fertilizer Association (IFA), world P fertilizer consumption fluctuated between 42 and 49 million tonnes (Mt) of P₂O₅ from 2010 to 2020. The IFA further predicts that the world P fertilizer demand will increase to 63-72 Mt P₂O₅ by 2050. The recycling of phosphorus is likely to be vital in ensuring this demand can be met.

Sources of phosphorus materials are waste streams such as anaerobic digestate, slurry, sewage biosolids, food waste, manure, or industrial waste such as cathodic material from batteries.

Phosphorus has low mobility, with most of it precipitated and bonded in the solids of the waste stream, making recovery difficult. Phosphorus dissolves under acidic conditions and current approaches to recovery involve adding large amounts of acids to waste streams to reduce the pH and facilitate phosphorus material release. The high chemical requirement of existing methods not only increases the cost of waste treatment but also raises the waste's salinity, complicating further utilization. Such methods are therefore economically unviable.

For phosphorus compounds in the liquid phase, existing methods for recovering phosphorus materials from waste streams include struvite crystallisation, wet-chemical treatment, and thermochemical treatment. These methods require high additive dosage, minimal solid content, low-contamination waste streams, high energy input or a combination thereof. Furthermore, the purity of the recovered products is low, and therefore has low market value.

There is therefore a requirement for a low energy method of recovering phosphorus materials requiring minimal additive input, that can handle waste streams that are highly contaminated, and produce high purity products with high phosphorus recovery.

### Summary

The present invention provides a method of recovering phosphorus from wide range of waste types with minimal additive or energy input. The method can handle waste streams that are highly contaminated and produce high purity products with high phosphorus recovery.

The method of recovering phosphorus materials from waste suspensions utilises bipolar membrane electrodialysis for in situ acidification of waste to release phosphorus ions from the solid phase of waste streams. Bipolar membrane electrodialysis may be coupled with conventional electrodialysis (ED) to purify the recovered phosphorus ions.

In a first aspect the invention provides a method for recovering phosphorus ions from a waste suspension. The method comprises:
(i) providing a waste suspension,
(ii) providing a bipolar membrane electrodialysis reactor (BMER) comprising:
   a cathode,
   an anode, and
   an acid chamber defined between a first cation exchange membrane and a first bipolar membrane and in electrical communication with the cathode and anode via these membranes, and
   an alkali chamber defined between the first cation exchange membrane and a second bipolar membrane and in electrical communication with the cathode and anode via these membranes,
   wherein each bipolar membrane is oriented such that the cationic exchange layer of the bipolar membrane is facing the cathode, and
   the chambers are arranged within the reactor such that the acid chamber is between the anode and the alkali chamber;
(iii) feeding the waste suspension into the acid chamber of the BMER;
(iv) applying a current across the BMER to acidify the waste suspension in the acid chamber, thus releasing at least a portion of the phosphorus material from the solid phase into the liquid phase of the acidified waste suspension as phosphorus ions.

This method efficiently releases phosphorus from the solid phase into the liquid phase to provide a liquid phase having a high concentration of phosphate ions in solution.

In some embodiments, the method comprises further purification steps.

The method may further comprise the steps of separating the liquid phase of the acidified waste suspension from the solid phase of the acidified waste suspension phase to provide a liquid product.

The method may further comprise the steps of:
(v) providing an electrodialysis reactor comprising:
   a cathode,
   an anode,
   a concentrate chamber defined between a first cation exchange membrane and an anion exchange membrane, and
   a dilute chamber defined between the anion exchange membrane and a second cation exchange membrane,
   wherein both the concentrate chamber and the dilute chamber are in electrical communication with the cathode and anode via the membranes, and the chambers are arranged within the electrodialysis reactor such that the concentrate chamber is between the dilute chamber and the anode;
(vi) transferring the liquid product to the dilute chamber of the electrodialysis reactor; and
(vii) applying a current across the electrodialysis reactor causing the phosphate ions to pass through the anion exchange membrane from the dilute chamber to the concentrate chamber to provide a recovered phosphorus ion solution.

The method of this embodiment efficiently recovers phosphorus ions from high-solid waste into a high-purity phosphorus ion solution. The recovered phosphorus ions may then be further processed to create high-value phosphorus materials, such as FePO₄.

Economically, this method offers significant advantages over existing methods. Firstly, the bipolar membrane can split water into hydroxide and protons with high efficiency, featuring a theoretical energy consumption of only 79.9 kJ/mol, significantly lower than the 198.5 kJ/mol required by traditional electrolysis. Secondly, the invention eliminates the need for chemical additives, thereby avoiding chemical costs.

Environmentally, this method eliminates the need for chemical additives, thereby preventing secondary pollution.

The resulting solution can be used to produce high-value products, such as iron phosphate, a raw material used in the production of lithium iron phosphate (LFP) which is a component of battery cathodes.

### Detailed Description

The present invention provides a method for recovering phosphorus ions from waste suspension using a bipolar membrane electrodialysis reactor (BMER). The method comprises:
(i) providing a waste suspension,
(ii) providing a bipolar membrane electrodialysis reactor (BMER) comprising:
   a cathode,
   an anode, and
   an acid chamber defined between a first cation exchange membrane and a first bipolar membrane and in electrical communication with the cathode and anode via these membranes, and
   an alkali chamber defined between the first cation exchange membrane and a second bipolar membrane and in electrical communication with the cathode and anode via these membranes,
   wherein each bipolar membrane is oriented such that the cationic exchange layer of the bipolar membrane is facing the cathode, and
   the chambers are arranged within the reactor such that the acid chamber is between the anode and the alkali chamber;
(iii) feeding the waste suspension into the acid chamber of the BMER;
(iv) applying a current across the BMER to acidify the waste suspension in the acid chamber, thus releasing at least a portion of the phosphorus material from the solid phase into the liquid phase of the acidified waste suspension as phosphorus ions.

The bipolar membrane electrodialysis reactor (BMER) comprises an anode and a cathode. The BMER comprises an acid chamber defined between a bipolar membrane and a cation exchange membrane situated between a cathode and an anode. The acid chamber is in electrical communication with the cathode and the anode via the membranes. The BMER comprises an alkali chamber defined between the first cation exchange membrane and a second bipolar membrane and in electrical communication with the cathode and anode via these membranes.

Bipolar membranes have a cationic exchange layer and an anionic exchange layer. The interface between these layers is referred to as the interfacial layer. In contrast to conventional, monopolar, ion exchange membranes, there is limited or no ion transport across a bipolar membrane. Instead, when a current is applied the bipolar membranes promote a disproportionation reaction wherein water is electro-dissociated into protons and hydroxide ions at the interfacial layer. The electro-dissociation reaction occurs when the cationic exchange layer faces the cathode, and the anionic exchange layer faces the anode. The protons then pass through the cationic exchange layer (CEL), acidifying the CEL adjacent solution and the hydroxide ions pass through the anionic exchange layer (AEL) alkalifying the AEL adjacent solution.

Where a chamber is defined between two components, at least one wall of the chamber comprises the first component, and at least one wall of the chamber comprises the second component. Such an arrangement can be seen in the appended figures. Each chamber of the reactors described herein may be further defined by and provided with additional components. For example, each chamber may be provided with a fluid inlet and/or a fluid outlet to allow fluid to pass into and out of the chamber, respectively. In some embodiments a combined inlet/outlet is envisioned. In a further example, the components defining the chamber may be held in position by supports, which also form parts of the walls of the walls of the chamber. It will be appreciated that such components are common features of electrodialysis reactors and the person skilled in the field would readily understand where such provision was required.

Therefore, each bipolar membrane of the BMER utilised in the method of the present invention is oriented in such that of the cationic and anionic exchange layers of the bipolar membrane the cationic exchange layer is closest to the cathode. That is, each bipolar membrane is oriented such that the cationic exchange layer of the bipolar membrane is facing the cathode. This arrangement promotes the disproportionation reaction to provide protons and hydroxide ions thereby acidifying the acid chamber and alkalifying the alkali chamber.

As would be understood by the skilled person electrodialysis reactors, such as the BMER of the present invention, further comprise chambers defined between a membrane of the electrodialysis reactors and an electrode. It will be appreciated that these chambers bookend the membrane and chamber assembly of the reactor. In the BMER of the present invention a chamber defined between the anode and the first bipolar membrane may be referred to as the anode chamber. A chamber defined between the cathode and the second bipolar membrane may be referred to as the cathode chamber.

These anode and cathode chambers comprise electrolyte such as a sodium sulfate solution. The solution is present to rinse the electrodes, remove gas bubbles generated from the chamber and to provide a medium for the mixing of hydroxide ions and protons produced by the process. The anode of the electrodialysis reactor will produce protons and oxygen. The cathode of the electrodialysis reactor will produce hydroxide ions and hydrogen gas.

The protons generated by the bipolar membrane in the BMER move through the membranes toward the cathode. Hydroxide ions move toward the anode. By interposing a cationic exchange membrane between the two bipolar membranes in the BMER acidic and alkali chambers are created and the travel of hydroxide ions into the acid chamber is prevented, lowering the pH of the acid chamber.

To acidify the acid chamber of the BMER a current must be applied across the reactor. Where a current is applied across the reactors defined herein, a current is applied between the anode and the cathode of that reactor. The maximum magnitude of this current is determined by the technical requirements of the bipolar membrane, which differ between manufacturers. It will also be appreciated that the greater the current the shorter the time required to acidify the acid chamber. The skilled person will be able to determine the appropriate current for the process according to the operating guidelines for the bipolar membrane in use and the commercial requirements of the implementation.

In some embodiments of the present invention, the current density applied across the BMER may be at least 0.01 A/m² with respect to the size of the membranes, such as at least 0.05 A/m², at least 0.1 A/m², at least 0.3 A/m², at least 0.5 A/m², at least 1 A/m² or at least 1.2 A/m². In some embodiments of the present invention, the current applied across the BMER may be 500 A/m² or less, such as 250 A/m² or less, 150 A/m² or less, 140 A/m² or less, 130 A/m² or less, 120 A/m² or less, 110 A/m² or less, 100 A/m² or less, 95 A/m² or less, 90 A/m² or less, or 85 A/m² or less. In some embodiments, the current is from 0.01 to 500 A/m², such as from 0.05 to 250 A/m², from 0.1 to 150 A/m², from 0.01 to 150 A/m² or from 0.01 to 100 A/m².

The skilled person will appreciate that the pH of the solution decreases over time as the current is applied. The rate of decrease in pH is also dependent on the size of the current applied. The solubility of phosphate salts is highly depending on pH. In neutral pH, the phosphorus salts such as iron phosphate and calcium phosphate have low solubility, as pH decreases the solubility of the phosphorus salts increases. At low pH, such as 5 or less, the phosphorus salts will be dissolved and release cations and phosphorus ions into liquid phase.

In some embodiments, the pH of the waste suspension is reduced to 5 or less in step (iii). For example, the pH of the waste suspension may be reduced to 4.5 or less, 4 or less or 3.5 or less. The pH of the waste suspension may be reduced to from 1 to 5, such as from 1 to 4.5, from 1 to 4, from 1 to 3.5, from 1.5 to 5, from 2 to 5, from 2.5 to 5, from 2 to 4, from 2 to 3.5 or from 2.5 to 3.5.

pH may be measured by any method known in the art. For example, pH may be measured using the hydrogen-electrode method, wherein electrode potential is measured between platinum black electrode and silver chloride electrode. The measured potential is inversely proportional to the pH of the solution.

As noted above, acidification of the waste suspension is achieved with protons generated by hydrolysis in the BMER. In some embodiments, some further acidification may be achieved by adding an organic or inorganic acid to the waste suspension before or during step (ii). In preferred embodiments the majority of the protons provided to the waste suspension during step (ii) will be generated electrolytically in the BMER, for example at least 50% of the protons will be generated electrolytically, such as at least 60%, at least 70%, at least 80%, at least 90%, at least 95% at least 99%, or at least 100%. By generating the protons electrolytically in the BMER, the addition of acidifying additives is reduced or avoided which provides economic and environmental benefits. In addition, avoiding the use of additives prevents secondary contamination. Generating the protons electrolytically across a bipolar membrane also has lower energy requirements than traditional hydrolysis. Traditional hydrolysis has an energy consumption of 198.5 KJ/mol whilst hydrolysis across a bipolar membrane has a theoretical energy consumption of 79.9 KJ/mol.

In some embodiments, The BMER comprises two or more units comprising an acid chamber and an alkali chamber. In such embodiments, the acid and alkali chambers of the BMER as defined above may be referred to as bipolar membrane repeating units and the BMER comprises two or more such bipolar membrane repeating units. Each bipolar membrane repeating unit comprises an acid chamber defined between a first bipolar membrane and a cation exchange membrane, and an alkali chamber defined between the cation exchange membrane and a second bipolar membrane. The two or more bipolar membrane repeating units are oriented such that (a) the acid chamber of a first repeating unit shares a bipolar membrane with the alkali chamber of an adjacent bipolar membrane repeating unit and/or (b) the alkali chamber of the first repeating shares a bipolar membrane with an adjacent bipolar membrane repeating unit. The bipolar membrane repeating units will be arranged such that they are disposed between the cathode and the anode of the reactor to be in in electrical communication with each other via the membranes. Each repeating unit is oriented, the acid chamber is between the anode and the alkali chamber.

When the method utilises a BMER comprising two or more bipolar membrane repeating units, the waste suspension may split into portions and each portion may be fed into one of the two or more acid chambers. The method then proceeds as outlined above, with the portions of acidified wate suspension being optionally being combined between steps (iii) and (iv).

By utilising a BMER having more than one acid chamber and performing the acidification step in sequence, the throughput and energy efficiency of the acidification step (iii) may be increased.

Phosphorus materials are any compounds comprising phosphorus moieties. In some embodiments, the phosphorus materials are phosphate salts such as lithium iron phosphate, trisodium phosphate, or calcium hydroxyapatite.

Phosphorus ions are ions that comprise phosphorus moieties. The term phosphorus ions may comprise phosphorus oxides, polyphosphates, organophosphorus ions or a combination thereof. In some preferred embodiments, the phosphorus ions may be phosphate ions.

The waste suspension comprises solid waste material in suspension in a liquid phase. The waste suspension may comprise at least 3 wt.% solids. For example, the waste suspension may comprise at least 5 wt.% solids, at least 7 wt.% solids, at least 10 wt.% solids, at least 12 wt.% solids, at least 15 wt.% solids, at least 20 wt.% solids, at least 25 wt.% solids, at least 30 wt.% solids, or at least 50 wt.% solids. The waste suspension may comprise no more than 99 wt.% solids, such as no more than 97 wt.% solids, no more than 95 wt.% solids, no more than 93 wt.% solids, no more than 90 wt.% solids, no more than 87 wt.% solids, or no more than 97 wt.% solids. In some embodiments, the waste suspension comprises from 3 wt.% to 99 wt.% solids. Wt.% is by weight of the waste suspension.

The liquid phase may comprise water. For example, the liquid phase may be at least 50% water by weight of the liquid phase. The skilled person will appreciate that due to the nature of waste streams other components common to waste streams may also be present in the liquid phase. For example, the liquid phase may comprise pharmaceuticals, pesticides, organic and/or inorganic salts, organic solvents, surfactants, bacteria, viruses, urea, proteins or combinations thereof.

The waste suspension may comprise anaerobic digestate, slurry, sewage biosolids, food waste, manure, cathodic material or combinations thereof. In some embodiments the waste suspension may comprise anaerobic digestate, slurry, sewage biosolids, food waste, manure or combinations thereof. The waste is therefore derived from organic waste streams such as farmyards or kitchens.

In some embodiments, the waste of the waste suspension comprises a cathodic material. The cathodic material is a phosphorus containing cathodic material, which may be derived from industrial processes or from battery recycling. The cathodic material may comprise or consist of lithium iron phosphate (LFP). LFP is a key component of cathodes in batteries, and the present invention provides a method of recycling this material at the end of a battery's life.

Where the waste source is a dry waste source a solvent, preferably water, may be added to the dry waste to form a suspension. The waste suspension should be fluid, such that it can be pumped into the acid chamber. For example, a solvent may be added to the dry waste to obtain a suspension comprising at least 1 wt.% solvent, such as at least 5 wt.%, by weight of the waste suspension.

For example, dry waste comprising LFP may have a solvent such as water added to it to provide a fluid waste suspension. This fluid waste suspension may then be used in the method of the present invention.

In some embodiments, the alkali chamber of the BMER may collect cations released as a by-product from the solid of the waste suspension along with the phosphorus material during step (iv). Cations travel towards the cathode during step (iv), passing from the acid chamber to the alkali chamber. In the acid chamber they are neutralised in the alkali conditions to provide a neutralized material. The method may comprise the further step following step (iv) of removing the solution comprising the neutralized material from the alkali chamber. The material may be used to prepare further commercial products.

Where the waste suspension comprises LFP the cations released in step (iv) will comprise lithium and iron cations. Lithium ions will be neutralised to lithium hydroxide (LiOH), which may be recycled into battery production or other uses. Iron ions will be neutralised to iron hydroxides (FeOHₓ).

Where the waste suspension comprises organic waste such as anaerobic digestate, slurry, sewage biosolids, food waste, manure or combinations thereof, the cations released in step (iv) will comprise nitrogen containing cations such as ammonium. Ammonium cations will be neutralised into ammonia, which may be recovered for further use, such as the production of fertilisers.

In some embodiments, the waste suspension is filtered prior to the method to remove larger solid particles. Removing larger solids prevents clogging of the reactors during the reaction. For example, particles with a dimension greater than 5 cm may be removed. The skilled person will appreciate that the precise size of the particles to be removed will depend on the parameters of the reactors. Larger reactors can accommodate larger particles without risk of clogging.

The method may comprise further purification steps.

In some embodiments, the method further comprises, following step (iv), a step of separating the liquid phase from the solid phase to provide a liquid product. In some embodiments, the liquid phase of the acidified waste suspension is separated from the solid phase to provide liquid product by filtration, centrifugation, decantation, or a combination thereof.

The method may further comprise the steps of:
(v) providing an electrodialysis reactor comprising:
   a cathode,
   an anode,
   a concentrate chamber defined between a first cation exchange membrane and an anion exchange membrane, and
   a dilute chamber defined between the anion exchange membrane and a second cation exchange membrane,
   wherein both the concentrate chamber and the dilute chamber are in electrical communication with the cathode and anode via the membranes, and the chambers are arranged within the electrodialysis reactor such that the concentrate chamber is between the dilute chamber and the anode;
(vi) transferring the liquid product to the dilute chamber of the electrodialysis reactor; and
(vii) applying a current across the electrodialysis reactor causing the phosphate ions to pass through the anion exchange membrane from the dilute chamber to the concentrate chamber to provide a recovered phosphorus ion solution.

The electrodialysis reactor (ER) comprises a concentrate chamber defined between a first cation exchange membrane and an anion exchange membrane, and a dilute chamber defined between the anion exchange membrane and a second cation exchange membrane. Both chambers and the membranes defining them are situated between an anode and a cathode. When a current is applied across the ER, anions move towards the anode passing through the anion exchange membrane but are prevented from moving further by the cation exchange membranes. This leads to phosphate ions moving from the dilute chamber to the concentrate chamber, and the concentration of phosphate ions in the concentrate chamber as they are prevented from moving further towards the anode. Cations move towards the cathode passing through the cation exchange membrane.

As ion exchange membranes only allow ions pass through, phosphate ions may be extracted from waste to provide a high purity solution free from or substantially free from organic matter pollution.

To extract the phosphorus material from the dilute chamber of the ER into the concentrate chamber a current must be applied across the reactor. Where a current is applied across the electrodialysis reactors defined herein, a current is applied between the anode and the cathode of that reactor. The maximum magnitude of this current is determined by the technical requirements of the ion exchange membranes. It will also be appreciated that the greater the current the quicker the extraction of the phosphate from the separated liquid phase. The skilled person will be able to determine the appropriate current for the process according to the operating guidelines for the membranes in use and the time requirements of the implementation.

In some embodiments of the present invention, the current density applied across the ER may be least 1 A/m², such as at least 10 A/m², at least 50 A/m², at least 100 A/m². In some embodiments of the present invention, the current applied across the ER may be 500 A/m² or less, such as 300 A/m² or less, 100 A/ m² or less, 10 A/m² or less. In some embodiments, the current applied across the ER is from 1 to 500 A/m², such as from 10 to 300 A/m², from 50 to 100 A/m², or from 1 to 100 A/m².

In some embodiments, the method comprises the further step of precipitating the recovered phosphorus ion from the solution, the step comprising mixing the recovered phosphorus material solution and metal cations to form metal phosphorus compounds. The metal cations may be provided in the form of metal salts, such as a metal halide.

In some embodiments, the metal cations are transition metal cations, such as first row transition metal cations. In some embodiments, the metal cations are selected from manganese, iron, cobalt, nickel cations or combinations thereof. In some embodiments the metal cations are iron cations.

In some embodiments the metal cations are iron cations, the phosphorus material comprises phosphate ions and the precipitated product is iron phosphate. The iron cations may be provided in the form of an iron salt, such as an iron halide. In some embodiments the iron halide is an iron chloride, iron bromide, or iron iodide.

In some embodiments, the electrodialysis reactor comprises an electrodialysis repeating unit of first cation exchange membrane, concentrate chamber, anion exchange membrane, dilute chamber, and second cation exchange membrane. The first cation exchange membrane and the second cation exchange membrane may be shared between adjacent repeating units. The repeating units will be disposed between the cathode and anode of the ER. The utilization of multiple single units improves the efficiency of the process.

The electrodialysis reactor may comprise one or more electrodialysis repeating unit, such as from one to ten, one to eight, one to five, or one to three electrodialysis repeating units. The skilled person would be aware of the number of electrodialysis repeating units required to obtain peak efficiency.

The present invention will now be described by way of example with reference to the accompanying drawings illustrating specific embodiments of the invention, in which:
- **Figure 1**: shows a schematic diagram of a method according to the invention.
- **Figure 2**: (a) shows the acidification step in the bipolar membrane electrodialysis reactor (BMER); (b) shows the extraction step in the electrodialysis reactor (ER).
- **Figure 3**: (a) shows variation of pH during BMER operation; (b) shows the phosphate concentration relating to pH during BMER operation.
- **Figure 4**: shows (a) the phosphorus concentration in the acid chamber increasing over time and (b) the pH decreasing over time.

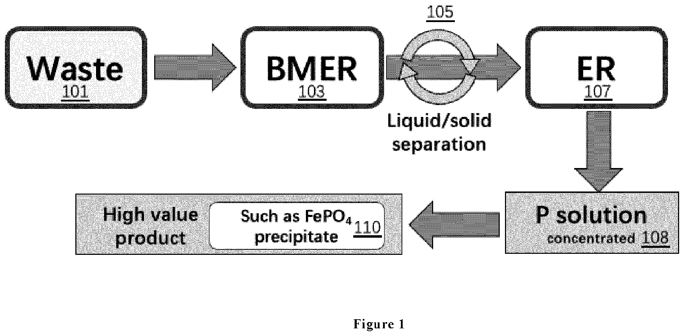

**Figure 1** shows an embodiment of the method according to the present invention. The method includes providing a bipolar membrane electrodialysis reactor (BMER) for acidification and providing an electrodialysis reactor (ER) for phosphate ion recovery. BMER technology forming the state of the art is designed for treating liquid waste streams. The method of Figure 1 provides BMER technology to enable the treatment of high-solid wastes. The schematic diagram shows the introduction of waste 101, the waste being a waste suspension, into a BMER 103 as defined herein for acidification. Following acidification, the liquid and solid phases are separated 105 to provide a liquid product having a high concentration of phosphorus ions.

The liquid product is introduced to the dilute chamber of the ER as defined herein where a recovery step 107 is performed using electrodialysis to provide a concentrated phosphorus ion solution 108 into the concentrate chamber of the ER. In a further step 110 to produce a high value product, the phosphate ions may be further purified by precipitation by introducing iron ions to provide a high value product. The phosphate ions may be purified in solution using selective electrodialysis.

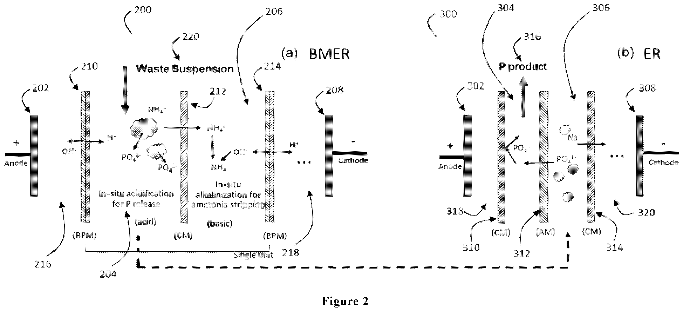

**Figure 2a** shows the acidification step in the bipolar membrane electrodialysis reactor (BMER). In an applied electric field, the bipolar membrane can split water into hydroxides and protons with high efficiency. With application of a cation exchange membrane (CM), the acid chamber is generated, which can be used for in-situ acidification for phosphorus ion release.

The BMER 200 provided in an embodiment of method according to the present invention comprises an anode 202 and a cathode 208. The reactor further comprises an acid chamber 204 and an alkali chamber 206. The acid chamber 204 is defined between a bipolar membrane 210 and a cationic exchange membrane 212. The alkali chamber is defined between the cationic exchange membrane 212 and the bipolar membrane 214. Each bipolar membrane in the BMER is oriented such that the cationic exchange layer of the bipolar membrane is facing the cathode. The acid chamber 204 is situated between the anode 202 and the alkali chamber 206. The BMER further comprises an additional anode chamber 216 defined between the anode 202 and the bipolar membrane 210 and cathode chamber 218 defined between the cathode 208 and the bipolar membrane 214. Bipolar membranes 210 and 214 and cation exchange membrane 212, defining the acid and alkali chambers, may form part of a single repeating unit. The repeating unit may be repeated in series between the anode and the cathode to increase the efficiency of the system.

Waste suspension 220 is fed into the acid chamber 204 where it is acidified as described herein. Once the required pH has been released and a portion of the phosphorus ions in the solid phase released into the liquid phase, the liquid and solid phases of the acidified waste suspension are separated to provide a liquid product having a high concentration of phosphorus ions. As shown in Figure 2a, nitrogen cations, such as ammonium, may pass through cation exchange membrane 212 into alkali chamber 206 where they are neutralised to form ammonia as a byproduct. The ammonia may be collected for further use.

**Figure 2b** shows purification step in an electrodialysis reactor (ER) 300 according to an embodiment of the method of the invention. The ER comprises an anode 302 and a cathode 308. The ER further comprises concentrate chamber 304 and dilute chamber 306. The concentrate chamber 304 is defined between cation exchange membrane 310 and anion exchange membrane 312. The dilute chamber 306 is defined between the anion exchange membrane 312 and cation exchange membrane 314. The chambers 304, 306 are arranged such that the concentrate chamber 304 is between the dilute chamber 306 and the anode 302. The ER of this embodiment further comprises an anode chamber 318 defined between the anode 302 and the cation exchange membrane 310. The ER of this embodiment further comprises a cathode chamber 320 defined between the cathode 308 and the cation exchange membrane 314.

In the electric field, phosphate ions migrate through the anion exchange membrane 312 towards to the anode. Further travel towards the anode 302 is prevented by the cation exchange membrane 310. As ion exchange membranes only allow ions to pass through, phosphate ions may be extracted from the liquid product leaving organic matter and other impurities in the dilute chamber.

The liquid product produced by the method according to the present invention is fed into dilute chamber 306, where a current is applied across the ER to draw phosphorus ions through the anionic exchange membrane into concentrate chamber 304 where further travel of the ions is prevented by the cationic exchange membrane 310. A concentrated, purified phosphorus ion solution 316 is therefore formed.

The solution may be taken forward to further purification or extraction steps as defined herein.

### Examples

### Recovery of Phosphorus from Anaerobic Digestate

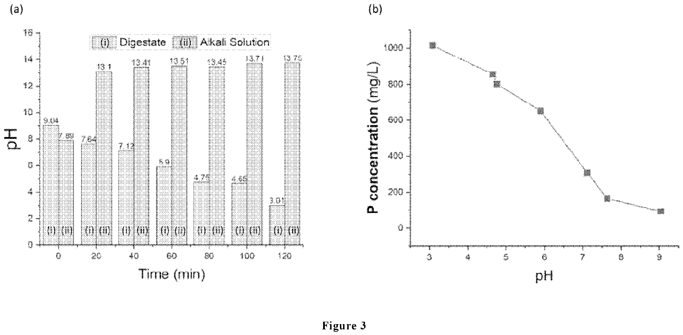

Anaerobic digestate, collected from an anaerobic digestion plant, was used as a representative waste for the experiment. A volume of 1 L of digestate was pumped into a BMER equipped with three repeating units, each having a membrane area of 180 cm², and an electric current of 1.5 A was applied. The pH of the digestate gradually decreased during the operation. After 120 min, the pH of the digestate had decreased to as low as 3.0. **Figure 3a** shows the variation of pH during BMER operation.

**Figure 3b** shows the phosphate concentration relating to pH. It shows that there is a significant correlation between phosphate concentration and the pH level. When the pH was reduced to 3, the P concentration in the solution increased to over 1000 mg/L, approximately 12 times higher than the initial concentration in the waste suspension, which was 82 mg/L. These results demonstrate that the method of the present invention is capable of releasing phosphorus materials from solids into the liquid phase.

After acidification, the digestate was subjected to centrifugation to separate the liquid and solid phases. The clarified liquid, with most particles removed and also referred to herein as liquid product, underwent purification treatment in the ER. The ER was equipped with three repeating units, each having a membrane area of 180 cm², and operated with an applied current of 1.5 A. The ER operation was completed once the conductivity of the digestate dropped below 1 mS/cm, indicating that the most of ions had been transferred from the liquid product into the ER product solution.

The waste material's appearance throughout the treatment process changed significantly. Initially, both the raw waste suspension and the acidified waste suspension exhibited high turbidity. However, following ER extraction, the phosphorus-enriched solution appeared clear, indicating successful separation of most pollutants, such as dissolved organic matter (DOM) and particles, from the ions.

To demonstrate the feasibility of extracting high-value FePO₄ from waste, 30 mM Fe³⁺ was introduced to the phosphorus-enriched solution. The formation and precipitation of FePO₄ at the bottom of the beaker were clearly observed, demonstrating that the FePO₄ precipitate is readily recoverable.

### Recovery of Phosphorus from Lithium Iron Phosphate (LFP)

A BMER equipped with five repeating units, each having a membrane area of 180 cm², was provided.

Lithium iron phosphate powder (standard powder purchased from chemical supplier) was mixed with water to prepare a waste suspension of 15 g/L. A volume of 0.5 L waste suspension was pumped to the BMER acid chamber, and 0.5 L ultrapure water was pumped to alkaline chamber. 0.5 A (27.8 A/m²) current was applied to BMER for operation.

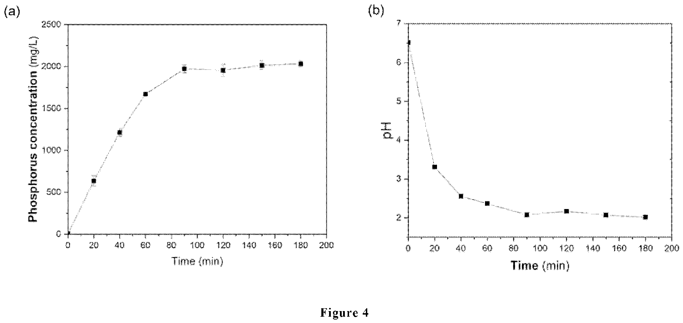

The results are shown in Figure 4. The results indicate that the BMER acidified the LFP waste, reducing the pH to below 3 and releasing phosphorus into the liquid, with phosphorus concentrations exceeding 2000 mg/L. This demonstrates the successful application of BMER in LFP recycling.

## Claims

1. A method for recovering phosphorus ions from a waste suspension, the method comprising:
(i) providing a waste suspension,
(ii) providing a bipolar membrane electrodialysis reactor (BMER) comprising:
a cathode,
an anode, and
an acid chamber defined between a first cation exchange membrane and a first bipolar membrane and in electrical communication with the cathode and anode via these membranes, and
an alkali chamber defined between the first cation exchange membrane and a second bipolar membrane and in electrical communication with the cathode and anode via these membranes,
wherein each bipolar membrane is oriented such that the cationic exchange layer of the bipolar membrane is facing the cathode, and
the chambers are arranged within the reactor such that the acid chamber is between the anode and the alkali chamber;
(iii) feeding the waste suspension into the acid chamber of the BMER;
(iv) applying a current across the BMER to acidify the waste suspension in the acid chamber, thus releasing at least a portion of the phosphorus material from the solid phase into the liquid phase of the acidified waste suspension as phosphorus ions.

2. The method of claim 1, wherein the method further comprises, following step (iv), a step of separating the liquid phase from the solid phase to provide a liquid product.

3. The method of claim 2, wherein the method further comprises the purification steps of:
(v) providing an electrodialysis reactor comprising:
a cathode,
an anode,
a concentrate chamber defined between a first cation exchange membrane and an anion exchange membrane, and
a dilute chamber defined between the anion exchange membrane and a second cation exchange membrane,
wherein both the concentrate chamber and the dilute chamber are in electrical communication with the cathode and anode via the membranes, and
the chambers are arranged within the electrodialysis reactor such that the concentrate chamber is between the dilute chamber and the anode;
(vi) transferring the liquid product to the dilute chamber of the electrodialysis reactor; and
(vii) applying a current across the electrodialysis reactor causing the phosphate ions to pass through the anion exchange membrane from the dilute chamber to the concentrate chamber to provide a recovered phosphorus ion solution.

4. The method of any preceding claim, wherein the method comprises the further step of the precipitating the recovered phosphorus ion from the solution, the step comprising mixing the acidified waste solution, liquid product or recovered phosphorus material solution with metal cations to form metal phosphorus compounds.

5. The method of claim 4, wherein the metal cations are transition metal cations.

6. The method of claim 5, wherein the transition metal cations are iron cations.

7. The method of any preceding claim, wherein the waste suspension comprises anaerobic digestate, slurry, sewage biosolids, food waste, manure, lithium iron phosphate or combinations thereof.

8. The method of any preceding claim, wherein the liquid phase of the acidified waste suspension is separated from the solid phase by filtration, centrifugation, decantation, or a combination thereof to provide the liquid product.

9. The method of any preceding claim, wherein in step (ii) the pH of the waste suspension is reduced to 5 or less.

10. The method of any preceding claim, wherein in step (ii) the pH of the waste suspension is reduced to 4 or less.

11. The method of any preceding claim, wherein in step (ii) the pH of the waste suspension is reduced to from 5 to 2.

12. The method of any preceding claim, wherein in step (ii) the protons that acidify the waste suspension enter the waste suspension only through the membrane.

13. The method of any preceding claim, wherein the phosphorus ions comprise phosphorus oxides, polyphosphates, organophosphorus or a combination thereof.

14. The method of claim 13, wherein the phosphorus ions comprise or consist of phosphate ions.
